# EUROPÄISCHE PATENTSCHRIFT

(11) **EP 0 818 619 B1**
(45) Veröffentlichungstag und Bekanntmachung des Hinweises auf die Patenterteilung: **06.08.2003**
(21) Anmeldenummer: 97109469.3
(22) Anmeldetag: 11.06.1997
(51) Int. Cl.: F02D 41/22

(54) **Verfahren und Vorrichtung zur Überwachung der Stellung einer variablen Ventilsteuerung**
Method and apparatus for monitoring the state of a variable valve control
Méthode et dispositif pour surveiller l'état d'une commande variable de soupapes

(30) Priorität: 10.07.1996 DE 19627796
(43) Veröffentlichungstag der Anmeldung: 14.01.1998
(73) Patentinhaber: Dr.Ing.h.c. F. Porsche Aktiengesellschaft, 70435 Stuttgart (DE)
(72) Erfinder: Schwarzenthal, Dietmar, 71254 Ditzingen (DE)

(56) Entgegenhaltungen:
- EP-A- 0 398 481
- EP-A- 0 651 148
- US-A- 4 899 701
- US-A- 5 024 191
- US-A- 5 140 955

## Beschreibung

Die Erfindung betrifft ein Verfahren und eine Vorrichtung zur Überwachung der Stellung einer variablen Ventilsteuerung.

Bei Brennkraftmaschinen, die mit einer variablen Ventilsteuerung ausgestattet sind, ist es regelmäßig erforderlich, die Funktion dieser variablen Ventilsteuerung zu überwachen. Bekannte Überwachungsverfahren ermitteln die Stellung eines zur Verstellung der Ventilsteuerung verwendeten Bauteiles, um so die aktuelle Stellung der Ventilsteuerung zu erfassen. Mittels eines derartigen Überwachungsverfahrens ist es jedoch nur möglich, eine globale Aussage dahingehend zu treffen, in welcher Weise die Ventilsteuerung zum gegenwärtigen Zeitpunkt angesteuert ist.

Es sind ferner Verfahren zum Erkennen von Verbrennungsaussetzen bei Brennkraftmaschinen bekannt, die auf einer Analyse des Verlaufs der Winkelgeschwindigkeit der Kurbelwelle während eines Arbeitsspieles eines Zylinders der Brennkraftmaschine basieren. Verbrennungsaussetzer führen dabei zu speziellen Geschwindigkeitsverlaufsänderungen gegenüber dem Normalzustand. Ein derartiges Verfahren ist beispielsweise in der DE 40 09 285 A1 beschrieben.

Ferner ist aus der EP 0 398 481 A1 ein Verfahren bzw. eine Vorrichtung nach der Gattung der unabhängigen Ansprüche bekannt. Diese EP 0 398 481 erfaßt die Stellung einer Ventilsteuerung in Bezug zu den Verbrennungszuständen.

Es ist demgegenüber Aufgabe der Erfindung, ein Verfahren und eine Vorrichtung zur Überwachung der Stellung einer variablen Ventilsteuerung zu schaffen, bei dem der bauliche Aufwand vermindert ist.

Diese Aufgabe wird mit den Merkmalen der unabhängigen Patentansprüche gelöst. Der Erfindung liegt dabei die Erkenntnis zugrunde, daß der Verbrennungsvorgang in einzelnen Zylindern auch abhängig vom Betriebsverhalten bzw. Betriebszustand einer variablen Ventilsteuerung ist. Insbesondere in Schaltvorgängen einer variablen Ventilsteuerung ändert sich der Verbrennungszustand der einzelnen Zylinder erheblich. Dieser Verbrennungsvorgang bzw. dessen Änderung kann nun mit der an sich bekannten Analyse der Winkelgeschwindigkeit der Kurbelwelle, genauer der Drehungleichförmigkeit an der Kurbelwelle, erfaßt werden. Aus dem Verbrennungsvorgang bzw. der erfaßten Drehungleichförmigkeit wird nun erfindungsgemäß auf den Betriebszustand der variablen Ventilsteuerung geschlossen.

Mit der Erfindung ist der besondere Vorteil verbunden, daß neben der Reduktion des meßtechnischen Aufwandes, denn ein Geber für die Winkelstellung der Kurbelwelle ist bei modernen Brennkraftmaschinen ohnehin vorgesehen, nun der Betriebszustand einer variablen Ventilsteuerung anhand des von der variablen Ventilsteuerung beeinflußten Verbrennungszustandes der Brennkraftmaschine bestimmt wird. Dies ist insbesondere dann von großer Bedeutung, wenn die Überwachung der variablen Ventilsteuerung notwendig ist, um die Einhaltung von gesetzlich vorgeschriebenen Abgaswerten zu überwachen und nachzuweisen (OBD II). Neben der Verminderung des meßtechnischen Aufwandes ergibt sich mit der Erfindung noch der weitere Vorteil, daß sowohl die Ansteuerung wie auch die Überwachung der variablen Ventilsteuerung im Motorsteuergerät erfolgt. Da dieses Motorsteuergerät ohnehin das Signal des Gebers für den Kurbelwellenwinkel erhält, kann die Erfindung innerhalb eines Motorsteuergerätes realisiert werden, ohne daß zusätzliche Leitungen oder Pins am Steuergerät notwendig wären.

So wird vorgeschlagen die Analyse der Drehungleichförmigkeit an der Kurbelwelle zylinderspezifisch durchzuführen und auszuwerten, hieraus zylinderspezifisch den Verbrennungszustand zu bestimmen und mit dem Verbrennungszustand der anderen Zylinder zu vergleichen. Aus der Abweichung des Verbrennungszustandes eines einzelnen Zylinders vom Mittelwert des Verbrennungszustandes in allen Zylindern lassen sich dann Aussagen über das Fehlverhalten der variablen Ventilsteuerung hinsichtlich einzelner Zylinder ziehen.

Die Ausführung der Erfindung wird erleichtert, wenn, wie femer vorgeschlagen, die Auswertung des Signales des Gebers für den Kurbelwellenwinkel dadurch erfolgt, daß die ermittelte Drehzahlungleichförmigkeit mit Grenzwerten verglichen wird, die abhängig von Last und Drehzahl der Brennkraftmaschine als Normal- oder Bezugswerte in einem Speicher abgelegt sind.

In den Unteransprüchen sind vorteilhafte Weiterbildungen der Erfindung beschrieben. Schließlich wird vorgeschlagen, zur Auswertung des Signales des Gebers für den Kurbelwellenwinkel den Verlauf der Drehzahlungleichförmigkeiten zu ermitteln und mit einem vorgegebenen Verlauf zu vergleichen. Da hier der Verlauf der Drehzahlungleichförmigkeit entscheidend ist, ist diese Auswertung weitgehend unanfällig gegen äußere Störungen. Zur weiteren Vereinfachung kann es vorgesehen sein, diese Auswertung nur dann durchzuführen, wenn die Stellung der variablen Ventilsteuerung verändert wird. Damit ist während der übrigen Zeit das Steuergerät von dieser Überwachungsaufgabe entlastet.

Die erfindungsgemäße Überwachung der variablen Ventilsteuerung kann sowohl und mit gleichen Vorteilen als Teil einer programmgesteuerten Steuervorrichtung des Fahrzeuges (Verfahren) als auch als diskrete Schaltung (Vorrichtung) dargestellt werden.

Die Erfindung ist nachstehend anhand der in den Figuren dargestellten Ausführungsbeispiele näher erläutert. Es zeigen:
- Fig. 1: eine schematische Darstellung einer Brennkraftmaschine mit einer variablen Ventilsteuerung und einem Steuergerät hierzu,
- Fig. 2: als erstes Ausführungsbeispiel ein Blockschaltbild für eine im Steuergerät angeordnete Auswerteeinrichtung und eine Überwachungseinrichtung,
- Fig. 3: als zweites Ausführungsbeispiel ein Ablaufdiagramm eines im Steuergerät ablaufenden Programmablaufes und
- Fig. 4: ein Diagramm einer Drehzahlungleichförmigkeit, eines Mittelwertes der Drehzahlungleichförmigkeit, eines Normalwertes der Drehzahlungleichförmigkeit sowie eines Ausgangssignales VC des Steuergerätes über der Zeit t zur Darstellung der Wirkungsweise.

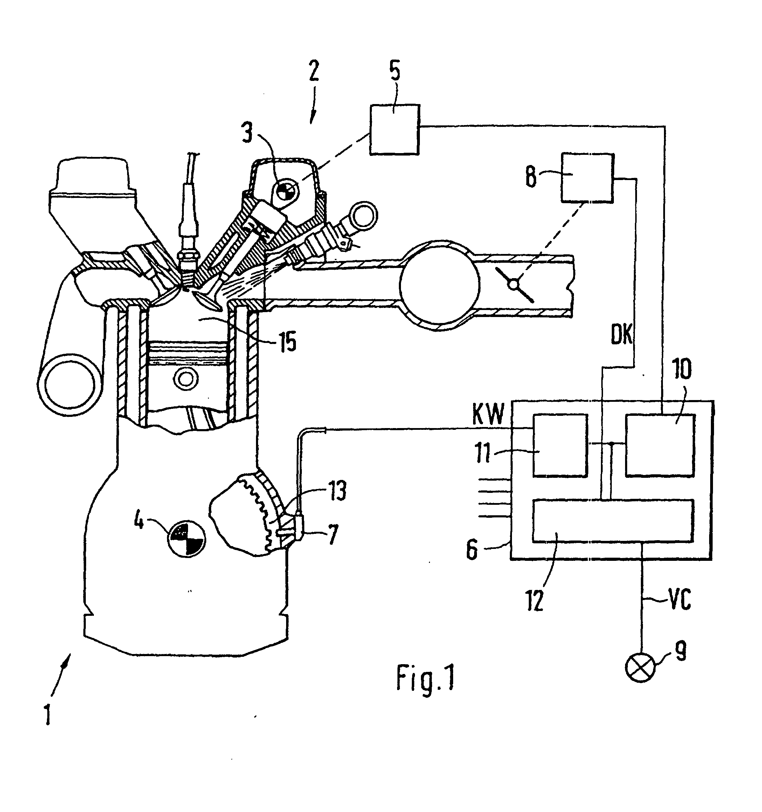

Fig. 1 zeigt schematisch eine Brennkraftmaschine 1, die mit einer variablen Ventilsteuerung 2 ausgestattet ist, d.h. bei der das Verhältnis der Winkellage einer Nockenwelle 3, hier der Einlaßnockenwelle, zur Winkellage einer Kurbelwelle 4 mittels eines Stellers 5 veränderbar ist. Der Steller 5 wird von einem Steuergerät 6 angesteuert, das neben weiteren, nicht dargestellten Signalen von einem Kurbelwellengeber 7 ein Signal KW für die Winkelstellung der Kurbelwelle 4 und von einem Drosselklappengeber 8 ein Signal DK entsprechend der an der Brennkraftmaschine 1 anliegenden Last erhält. Eine Anzeigevorrichtung 9 wird ebenfalls vom Steuergerät 6 angesteuert.

In einem ersten Ausführungsbeispiel weist das Steuergerät 6 unter anderem eine Ventilsteuereinrichtung 10, eine Auswerteeinrichtung 11 und eine Überwachungseinrichtung 12 auf. Die Auswerteeinrichtung 11 und die Überwachungseinrichtung 12 bilden zusammen mit dem Kurbelwellengeber 7, der hier als Gebereinrichtung zum Erfassen einer Drehzahlungleichförmigkeit der Kurbelwelle 4 wirkt, eine Vorrichtung zur Überwachung der Stellung der variablen Ventilsteuerung 2.

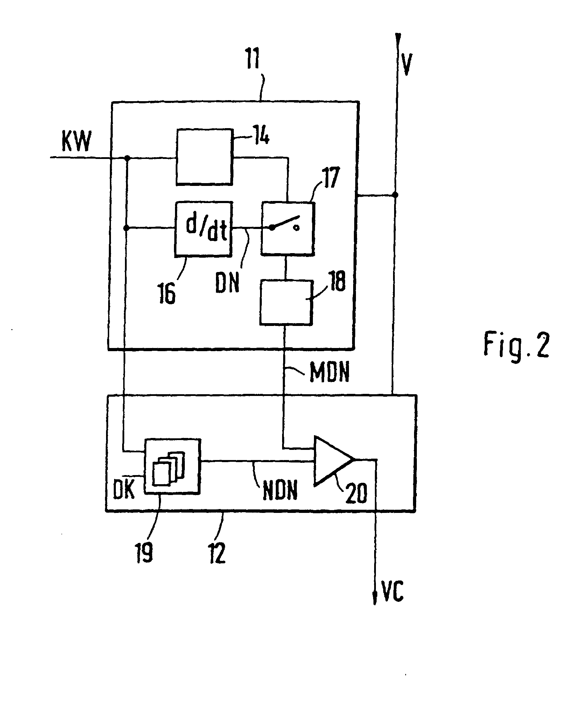

Im Blockschaltbild nach Fig. 2 sind die Auswerteeinrichtung 11 sowie die Überwachungseinrichtung 12 näher dargestellt. Die Auswerteeinrichtung 11 erhält vom Kurbelwellengeber 7 das Signal KW entsprechend der Winkelstellung der Kurbelwelle 4. Im vorliegenden Ausführungsbeispiel besteht dieses Signal aus einer Impulsfolge, wobei jeder Impuls einem bestimmten Winkelabschnitt entspricht, der von der Kurbelwelle 4 überstrichen wurde. An einer vorgegebenen Stellung der Kurbelwelle ist eine Marke 13 aufgebracht, die einen besonderen Impuls erzeugt und es daher ermöglicht, die Absolutstellung der Kurbelwelle zu bestimmen.

Eine Diskriminatoreinheit 14 wertet die Stellung der Kurbelwelle 4 mit Hilfe des Kurbelwellensignales KW aus und erzeugt jedes mal dann ein Signal, wenn in einem Zylinder 15 der Brennkraftmaschine 1 ein Verbrennungsvorgang abläuft. Parallel zum Diskriminator 14 wird von einem Differenzierer 16 das Kurbelwellensignal KW differenziert, um so ein Signal DN zu erhalten, daß die Ungleichförmigkeit der Winkelbewegung der Kurbelwelle 4 beschreibt. Das Ungleichförmigkeitssignal DN ist über einen Schalter 17 auf einem Mittelwertbildner 18 geführt, wobei der Schalter 17 vom Ausgangssignal des Diskiminators 14 angesteuert ist und nur dann schließt, wenn der Diskriminator 14 einen Verbrennungsvorgang erkennt. Somit liegt ausgangsseitig des Mittelwertbildners 18 ein Signal MDN an, das den Mittelwert der Ungleichförmigkeit der Winkelbewegung der Kurbelwelle 4 zu den Zeitpunkten beschreibt, zu denen im Zylinder 15 ein Verbrennungsvorgang stattfindet. Die Überwachungseinrichtung 12 erhält neben dem Signal des Mittelwertes MDN und dem Kurbelwellensignal KW auch das Signal DK des Drosselklappengebers 8. In einem Speicher 19 stimmt abhängig vom Signal DK des Drosselklappengebers 8 und abhängig vom Signal KW des Kurbelwellengebers 7 Normalwerte für den Mittelwert der Drehzahlungleichförmigkeit MDN abgespeichert. Ein Vergleicher 20 vergleicht den aktuellen Mittelwert der Drehzahlungleichförmigkeit MDN mit dem zuvor ermittelten Normalwert der Drehzahlungleichförmigkeit NDN und gibt ein Signal VC zur Ansteuerung der Anzeigevorrichtung 9 ab, wenn die Abweichung der beiden Werte voneinander einen vorgegebenen Wert überschreitet. Im vorliegenden Ausführungsbeispiel, bei dem die variable Ventilsteuerung 2 nur in zwei Positionen einstellbar ist, bedeutet das Ausgangssignal VC daß sich die variable Ventilsteuerung 2 in seiner Arbeitsposition befindet, in der die Brennkraftmaschine höhere Leistung abgibt, während bei nichtvorliegendem Ausgangssignal VC, die variable Ventilsteuerung sich in ihrer Ruhestellung befindet und die Brennkraftmaschine 1 eine geringere Leistung abgibt.

Ein sowohl der Auswerteeinrichtung 1, wie auch der Überwachungseinrichtung 12 zugeführtes Signal V wird von der Ventilsteuerung 10 erzeugt und zeigt an, daß die Ventilsteuerung 10 im Begriff steht, den Steller 5 anzusteuern und damit die variable Ventilsteuerung 2 in ihren aktivierten Zustand zu bringen. Das Signal V wird zur Aktivierung sowohl der Auswerteeinrichtung 11 wie auch der Überwachungseinrichtung 12 verwendet, d.h. beide Einrichtungen sind nur dann aktiv, wenn die Ventilsteuerung 10 eine Verstellung der variablen Ventilsteuerung 2 durchführt.

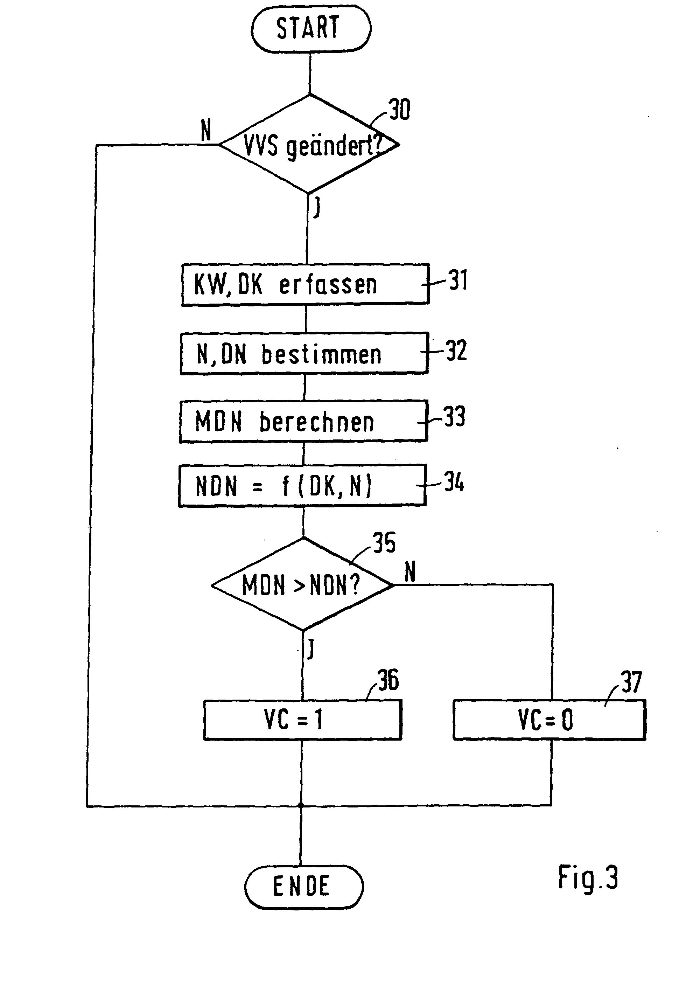

Statt, wie zuvor beschrieben, in diskreten Baugruppen kann die Erfindung selbstverständlich auch als Teil eines Programmablaufes dargestellt sein, wenn es sich bei dem Steuergerät 6 um ein Steuergerät mit Programmspeicher handelt. Ein derartiger Programmablauf ist in Fig. 3 als zweites Ausführungsbeispiel in Form eines Flußdiagrammes dargestellt. Der Ablauf beginnt mit einem Schritt 30, in dem geprüft wird, ob die Lage der variablen Ventilsteuerung 2 geändert werden soll. Ist dies nicht der Fall, so wird der Programmablauf unmittelbar beendet und ansonsten mit Schritt 31 fortgesetzt. In Schritt 31 werden als Eingangsgröße das Signal KW des Kurbelwellengebers 7 und das Signal DK des Drosselklappengebers 8 erfaßt. Im darauffolgenden Schritt 32 wird hieraus wie im ersten Ausführungsbeispiel die Kurbelwellendrehzahl N sowie die Drehzahlungleichförmigkeit DN bestimmt. Aus der Drehzahlungleichförmigkeit DN wird nachfolgend in Schritt 33 der Mittelwert MDN berechnet, wobei bei dieser Berechnung nur diejenigen Werte der Drehzahlungleichförmigkeit DN berücksichtigt werden, die während eines Verbrennungsvorganges erfaßt wurden. Ob ein Verbrennungsvorgang vorliegt oder nicht, wird hierbei mit Hilfe des Kurbelwellenwinkels KW bestimmt. In Schritt 34 schließlich wird aus einem Kennfeld das von der Drosselklappenstellung DK und der Kurbelwellendrehzahl N abhängig ist, der Normalwert für die Drehzahlungleichförmigkeit NDN ausgelesen. In Schritt 35 wird der berechnete Mittelwert der Drehzahlungleichförmigkeit MDN mit dem Normalwert der Drehzahlungleichförmigkeit NDN in der Weise verglichen, daß geprüft wird, ob der Mittelwert MDN den Normalwert NDN übersteigt. Ist dies der Fall, so wird in Schritt 36 ein Ausgangssignal VC = 1 ausgegeben. Führt der Vergleich hingegen zu einem negativen Ergebnis, so wird alternativ in Schritt 37 ein Ausgangssignal VC = 0 ausgegeben. Mit Schritt 36 bzw. Schritt 37 endet das Programm.

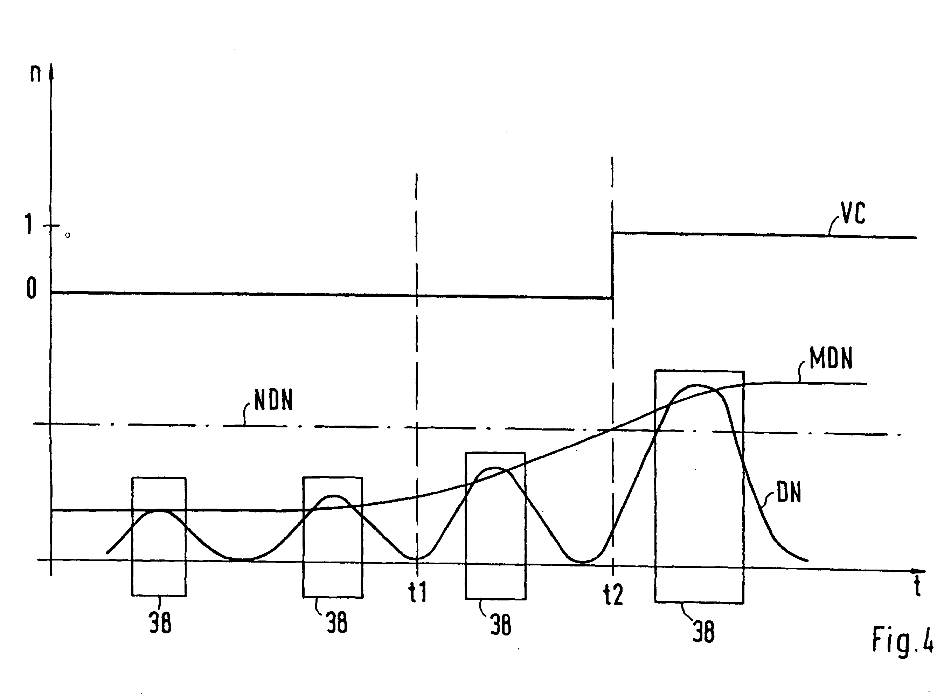

Die Wirkungsweise der im ersten Ausführungsbeispiel beschriebenen Vorrichtung bzw. des im zweiten Ausführungsbeispiel beschriebenen Verfahrens ist nachstehend anhand des in Fig. 4 gezeigten Diagrammes erläutert. Im Diagramm nach Fig. 4 sind beispielhaft die Drehzahlungleichförmigkeit DN, der Mittelwert der Ungleichförmigkeit MDN, der Normalwert der Drehzahlungleichförmigkeit NDN sowie das Ausgangssignal VC abhängig von der Zeit t aufgetragen. Vereinfachend wird vorausgesetzt, daß sich die Brennkraftmaschine im stationären Betrieb befindet und somit das Signal der Drosselklappenstellung DK sowie die Kurbelwellendrehzahl N konstante Werte annehmen. Unter dieser Voraussetzung zeigt sich für die Drehzahlungleichförmigkeit DN ein pulsierender Verlauf, wobei während eines Verbrennungsvorganges - dargestellt durch ein Fenster 38 - aufgrund des während des Verbrennungsvorganges an der Kurbelwelle 4 aufgebrachten Drehmomentes ein erhöhter Wert der Drehzahlungleichförmigkeit DN einstellt. Da die Drehzahlungleichförmigkeit DN nur in den Fenstern 38 erfaßt und ausgewertet wird, ergibt sich als Mittelwert für die Drehzahlungleichförmigkeit MDN ein Verlauf der in etwa den Spitzen der Drehzahlungleichförmigkeit DN entspricht.

Zum Zeitpunkt t1 wird die Ventilsteuerung 2 in der Weise verstellt, daß die Brennkraftmaschine 1 ein höheres Drehmoment abgibt. Sobald die Nockenwelle 3 tatsächlich verstellt ist und sich daraufhin der Verbrennungsvorgang im Zylinder 15 soweit geändert hat, daß an der Kurbelwelle 4 tatsächlich ein höheres Drehmoment anliegt, wird dies durch ein Anstieg sowohl der Drehzahlungleichförmigkeit DN wie auch des Mittelwertes der Drehzahlungleichförmigkeit MDN sichtbar.

Zum Zeitpunkt t2 übersteigt der Mittelwert der Drehzahlungleichförmigkeit MDN den Normalwert der Drehzahlungleichförmigkeit NDN, woraufhin das Ausgangssignal VC vom Zustand 0 in den Zustand 1 wechselt.

Dieses Signal VC kann dann in beiden Ausführungsbeispielen in verschiedenster Weise verwendet werden. In der einfachsten Form wird mit Hilfe des Signales VC die Anzeigevorrichtung 9 angesteuert, die dem Fahrer anzeigt, daß sich die Ventilsteuerung 2 in ihrem aktivierten Zustand befindet. In gleicher Weise kann das Signal VC von anderen Steuergeräten ausgewertet werden; insbesondere ist es sinnvoll, das Signal VC von der Ventilsteuerung 10 als Kontrolle für die Durchführung der Verstellung der Ventilsteuerung 2 und damit der Sicherungsfunktion des Stellers 5 auswerten zu lassen.

## Patentansprüche

1. Verfahren zur Überwachung der Stellung einer variablen Ventilsteuerung einer Brennkraftmaschine mit folgenden Schritten:
- Erfassen einer Drehzahlungleichförmigkeit einer Kurbelwelle der Brennkraftmaschine,
- Auswerten der Drehzahlungleichförmigkeit hinsichtlich des Verbrennungszuständes der Brennkraftmaschine
- Zuordnen des Verbrennungszustandes zu einer Stellung der variablen Ventilsteuerung, **dadurch gekennzeichnet, daß**
- zum Auswerten der Drehzahlungleichförmigkeit hinsichtlich des Verbrennungszustandes ein Mittelwert der Drehzahlungleichförmigkeit über alle Zylinder gebildet wird.

2. Verfahren nach Anspruch 2, **dadurch gekennzeichnet, daß** zum Zuordnen des Verbrennungszustandes zu einer Stellung der variablen Ventilsteuerung die Abweichung des Mittelwertes von einem Normalwert, der zumindest abhängig von der Drehzahl und dem Lastzustand der Brennkraftmaschine ist, gebildet und das Maß der Abweichung der aktuellen Stellung der variablen Ventilsteuerung zugeordnet wird.

3. Verfahren nach Anspruch 1, **dadurch gekennzeichnet, daß** zum Zuordnen des Verbrennungszustandes zu einer Stellung der variablen Ventilsteuerung der Mittelwert mit einem Grenzwert, der zumindest abhängig von der Drehzahl und dem Lastzustand der Brennkraftmaschine ist, verglichen und ein Überschreiten des Grenzwertes der angesteuerten Stellung der variablen Ventilsteuerung zugeordnet wird.

4. Verfahren nach Anspruch 1, **dadurch gekennzeichnet, daß** nach dem Bilden des Mittelwertes der Drehzahlungleichförmigkeit über alle Zylinder ein Verlauf des Mittelwertes der Drehzahlungleichförmigkeit über alle Zylinder gebildet wird
- zum Zuordnen des Verbrennungszustandes zu einer Stellung der variablen Ventilsteuerung eine Abweichung des Verlaufes mit einem Normal-Verlauf, der zumindest abhängig von der Drehzahl und dem Lastzustand der Brennkraftmaschine ist, gebildet und das Maß der Abweichung der aktuellen Stellung der variablen Ventilsteuerung zugeordnet wird.

5. Verfahren nach Anspruch 1, **dadurch gekennzeichnet, daß** zum Auswerten der Drehzahlungleichförmigkeit hinsichtlich des Verbrennungszustandes zylinderspezifisch die Drehzahlungleichförmigkeit für jeden Zylinder erfaßt und ein Mittelwert der Drehzahlungleichförmigkeit über alle Zylinder gebildet wird,
- zum Zuordnen des Verbrennungszustandes zu einer Stellung der variablen Ventilsteuerung die Drehzahlungleichförmigkeit jedes einzelnen Zylinders mit dem Mittelwert der Drehzahlungleichförmigkeit verglichen, zylinderspezifisch die Abweichung der Drehzahlungleichförmigkeit vom Mittelwert der Drehzahlungleichförmigkeit gebildet und bei Überschreiten eines Grenzwertes für die Abweichung, der zumindest abhängig von der Drehzahl und dem Lastzustand der Brennkraftmaschine ist, eine Fehlermeldung ausgegeben wird.

6. Verfahren nach einem der vorstehenden Ansprüche, **dadurch gekennzeichnet, daß** das Verfahren nur dann ausgeführt wird, wenn die Stellung der variablen Ventilsteuerung verändert wird.

7. Vorrichtung zur Überwachung der Stellung einer variablen Ventilsteuerung einer Brennkraftmaschine mit
einer Gebereinrichtung zum Erfassen einer Drehzahlungleichförmigkeit einer Kurbelwelle der Brennkraftmaschine,
einer Auswerteeinrichtung zum Auswerten der Drehzahlungleichförmigkeit hinsichtlich des Verbrennungszustandes der Brennkraftmaschine und
einer Überwachungseinrichtung zum Zuordnen des Verbrennungszustandes zu einer Stellung der variablen Ventilsteuerung, **dadurch gekennzeichnet, daß**
- die Auswerteeinrichtung einen Mittelwertbildner für die Drehzahlungleichförmigkeit über alle Zylinder aufweist,
- die Überwachungseinrichtung einen Speicher für einen Normalwert und/oder einen Grenzwert der Drehzahlungleichförmigkeit, der zumindest abhängig von der Drehzahl und dem Lastzustand der Brennkraftmaschine ist, und einen Vergleicher aufweist, wobei der Vergleicher die Abweichung des Mittelwertes vom Normalwert und/oder vom Grenzwert bildet und eine Ausgabeeinheit das Maß der Abweichung der aktuellen Stellung der variablen Ventilsteuerung zuordnet und ausgibt.

8. Vorrichtung nach Anspruch 7, **dadurch gekennzeichnet, daß**
die Auswerteeinrichtung einen Mittelwertbildner für die Drehzahlungleichförmigkeit über alle Zylinder und nachgeschaltet eine Aufzeichnungseinrichtung für den Verlauf des Mittelwertes der Drehzahlungleichförmigkeit aufweist.

9. Vorrichtung nach Anspruch 7, **dadurch gekennzeichnet, daß**
die Auswerteeinrichtung einen Diskriminator zur zylinderspezifischen Erfassung der Drehzahlungleichförmigkeit und einen Mittelwertbildner für die Drehzahlungleichförmigkeit über alle Zylinder aufweist.

10. Vorrichtung nach einem der Ansprüche 7-9, **dadurch gekennzeichnet, daß** eine Aktivierungsvorrichtung die Auswerteeinrichtung nur dann aktiviert, wenn die Stellung der variablen Ventilsteuerung verändert wird.

## Claims

1. A method of monitoring the setting of a variable valve control of an internal-combustion engine with the following steps:
- detecting a uniformity of the rotational speed of a crankshaft of the internal-combustion engine,
- evaluating the uniformity of the rotational speed with respect to the state of combustion of the internal-combustion engine,
- co-ordinating the state of combustion with a setting of the variable valve control,
**characterized in that**
- in order to evaluate the uniformity of the rotational speed with respect to the state of combustion an average value of the uniformity of the rotational speed over all the cylinders is formed.

2. A method according to Claim 2, **characterized in that** in order to co-ordinate the state of combustion with a setting of the variable valve control the deviation of the average value from a normal value, which is at least dependent upon the rotational speed and the loading state of the internal-combustion engine, is formed and the extent of the deviation is co-ordinated with the current setting of the variable valve control.

3. A method according to Claim 1, **characterized in that** in order to co-ordinate the state of combustion with a setting of the variable valve control the average value is compared with a limit value which is at least dependent upon the rotational speed and the loading state of the internal-combustion engine, and an exceeding of the limit value is co-ordinated with the controlled setting of the variable valve control.

4. A method according to Claim 1, **characterized in that** after the average value of the uniformity of the rotational speed over all the cylinders has been formed a curve of the average value of the uniformity of the rotational speed over all the cylinders is formed
- in order to co-ordinate the state of combustion with a setting of the variable valve control a deviation of the curve with a normal curve - which is at least dependent upon the rotational speed and the loading state of the internal-combustion engine - is formed, and the extent of the deviation is co-ordinated with the current setting of the variable valve control.

5. A method according to Claim 1, **characterized in that** in order to evaluate the uniformity of the rotational speed with respect to the state of combustion in a manner specific to the cylinders the uniformity of the rotational speed is detected for each cylinder, and an average value of the uniformity of the rotational speed over all the cylinders is formed,
- in order to co-ordinate the state of combustion with a setting of the variable valve control the uniformity of the rotational speed of each individual cylinder is compared with the average value of the uniformity of the rotational speed, the deviation of the uniformity of the rotational speed from the average value of the uniformity of the rotational speed is formed in a manner specific to the cylinders, and when a limit value for the deviation is exceeded, which is at least dependent upon the rotational speed and the loading state of the internal-combustion engine, an error report is issued.

6. A method according to one of the preceding Claims, **characterized in that** the method is performed only when the setting of the variable valve control is altered.

7. A device for monitoring the setting of a variable valve control of an internal-combustion engine having
a pick-up device for detecting a uniformity of the rotational speed of a crankshaft of the internal-combustion engine,
an evaluation device for evaluating the uniformity of the rotational speed with respect to the state of combustion of the internal-combustion engine, and
a monitoring device for co-ordinating the state of combustion with a setting of the variable valve control, **characterized in that**
- the evaluation device has an average-forming means for the uniformity of the rotational speed over all the cylinders,
- the monitoring device has a store for a normal value and/or a limit value of the uniformity of the rotational speed, which is at least dependent upon the rotational speed and the loading state of the internal-combustion engine, and a comparator, wherein the comparator forms the deviation of the average value from the normal value and/or from the limit value and an output unit co-ordinates the extent of the deviation with the current setting of the variable valve control and emits it.

8. A device according to Claim 7, **characterized in that** the evaluation device has an average-forming means for the uniformity of the rotational speed over all the cylinders and, situated downstream, a plotting device for the curve of the average value of the uniformity of the rotational speed.

9. A device according to Claim 7, **characterized in that** the evaluation device has a discriminator for detecting the uniformity of the rotational speed in a manner specific to the cylinders, and an average-forming means for the uniformity of the rotational speed over all the cylinders.

10. A device according to one of Claims 7 to 9, **characterized in that** an activating device activates the evaluation device only when the setting of the variable valve control is altered.

## Revendications

1. Procédé pour surveiller la position d'une commande variable de soupape d'un moteur à combustion interne comportant les étapes suivantes :
- détection d'une irrégularité de la vitesse de rotation d'un vilebrequin du moteur à combustion interne,
- évaluation de l'irrégularité de la vitesse de rotation sur le plan de l'état de combustion du moteur à combustion interne,
- affectation de l'état de combustion à une position de la commande variable de soupape, **caractérisé en ce que**
- pour exploiter l'irrégularité de la vitesse de rotation sur le plan de l'état de combustion, il est formé une valeur moyenne de l'irrégularité de la vitesse de rotation sur tous les cylindres.

2. Procédé selon la revendication 1, **caractérisé en ce que** pour l'affectation de l'état de combustion à une position de la commande variable de soupape, on forme l'écart de la valeur moyenne par rapport à une valeur normale qui dépend au moins de la vitesse de rotation et de l'état de charge du moteur à combustion interne, et la mesure de l'écart est affectée à la position actuelle de la commande variable de soupape.

3. Procédé selon la revendication 1, **caractérisé en ce que** pour l'affectation de l'état de combustion à une position de la commande variable de soupape, on compare la valeur moyenne à une valeur limite qui dépend au moins de la vitesse de rotation et de l'état de charge du moteur à combustion interne, et un dépassement de la valeur limite est affecté à la position commandée de la commande variable de soupape.

4. Procédé selon la revendication 1, **caractérisé en ce qu'**après formation de la valeur moyenne de l'irrégularité de la vitesse de rotation sur tous les cylindres, on forme une courbe de la valeur moyenne de l'irrégularité de la vitesse de rotation sur tous les cylindres,
- pour l'affectation de l'état de combustion à une position de la commande variable de soupape, on forme un écart de la courbe par rapport à une courbe normale qui dépend au moins de la vitesse de rotation et de l'état de charge du moteur à combustion interne, et la mesure de l'écart est affectée à la position actuelle de la commande variable de soupape.

5. Procédé selon la revendication 1, **caractérisé en ce que** pour exploiter l'irrégularité de la vitesse de rotation sur le plan de l'état de combustion, on détecte de manière spécifique au cylindre l'irrégularité de la vitesse de rotation pour chaque cylindre et on forme une valeur moyenne de l'irrégularité de la vitesse de rotation sur tous les cylindres,
- pour affecter l'état de combustion à une position de la commande variable de soupape, on compare l'irrégularité de la vitesse de rotation de chaque cylindre individuel à la valeur moyenne de l'irrégularité de la vitesse de rotation, on forme, de manière spécifique au cylindre, l'écart de l'irrégularité de la vitesse de rotation par rapport à la valeur moyenne de l'irrégularité de la vitesse de rotation, et en cas de dépassement d'une valeur limite de l'écart, qui dépend au moins de la vitesse de rotation et de l'état de charge du moteur à combustion interne, un avis de défaut est délivré.

6. Procédé selon l'une des revendications précédentes, **caractérisé en ce que** le procédé n'est mis en oeuvre que si la position de la commande variable de soupape est modifiée.

7. Dispositif pour surveiller la position d'une commande variable de soupape d'un moteur à combustion interne comportant un dispositif capteur pour détecter une irrégularité de la vitesse de rotation d'un vilebrequin du moteur à combustion interne,
un dispositif d'exploitation pour exploiter l'irrégularité de la vitesse de rotation sur la plan de l'état de combustion du moteur à combustion interne, et
un dispositif de surveillance pour affecter l'état de combustion à une position de la commande variable de soupape, **caractérisé en ce que**
- le dispositif d'exploitation comporte un générateur de valeur moyenne pour l'irrégularité de la vitesse de rotation sur tous les cylindres,
- le dispositif de surveillance comporte une mémoire pour une valeur normale et/ou une valeur limite de l'irrégularité de la vitesse de rotation qui dépend au moins de la vitesse de rotation et de l'état de charge du moteur à combustion interne, ainsi qu'un comparateur, le comparateur formant l'écart de la valeur moyenne par rapport à la valeur normale et/ou à la valeur limite, et une unité de sortie affectant la mesure de l'écart de la position actuelle de la commande variable de soupape et la délivrant.

8. Dispositif selon la revendication 7, **caractérisé en ce que** le dispositif d'exploitation comporte un générateur de valeur moyenne pour l'irrégularité de la vitesse de rotation sur tous les cylindres et, en aval, un dispositif d'enregistrement pour la courbe de la vitesse moyenne de l'irrégularité de la vitesse de rotation.

9. Dispositif selon la revendication 7, **caractérisé en ce que** le dispositif d'exploitation comporte un discriminateur pour la détection spécifique au cylindre de l'irrégularité de la vitesse de rotation, ainsi qu'un générateur de valeur moyenne pour l'irrégularité de la vitesse de rotation sur tous les cylindres.

10. Dispositif selon l'une des revendications 7 à 9, **caractérisé en ce qu'**un dispositif d'activation n'active le dispositif d'exploitation que si la position de la commande variable de soupape est modifiée.
